# EUROPÄISCHE PATENTSCHRIFT

(11) **EP 1 507 181 B1**
(45) Veröffentlichungstag und Bekanntmachung des Hinweises auf die Patenterteilung: **05.10.2011**
(21) Anmeldenummer: 03018414.7
(22) Anmeldetag: 13.08.2003
(51) Int. Cl.: G05B 9/03

(54) **Verfahren und Vorrichtung zur mehrstufigen Datenverarbeitung, insbesondere zur Diagnose, in einer technischen Anlage**
Method and device for multilevel data processing, particularly for diagnostics, in an industrial installation
Procédé et dispositif de traitement de données à niveaux multiples, en particulier pour diagnostiques, dans une installation technique

(43) Veröffentlichungstag der Anmeldung: 16.02.2005
(73) Patentinhaber: SIEMENS AKTIENGESELLSCHAFT, 80333 München (DE)
(72) Erfinder: Grühn, Michael, 91056 Erlangen (DE); Kunze, Ulrich, Dr., 91088 Bubenreuth (DE)

(56) Entgegenhaltungen:
- US-A- 5 469 150
- US-A- 5 884 206
- US-A- 5 997 166
- US-A1- 2002 107 589
- DORAISWAMI R ET AL: "An expert system for monitoring the status of control systems", INTELLIGENT CONTROL, 1990. PROCEEDINGS., 5TH IEEE INTERNATIONAL SYMPOS IUM ON PHILADELPHIA, PA, USA 5-7 SEPT. 1990, LOS ALAMITOS, CA, USA,IEEE COMPUT. SOC, US, 5 September 1990 (1990-09-05), pages 457-462, XP010021937, DOI: DOI:10.1109/ISIC.1990.128497 ISBN: 978-0-8186-2108-6

## Beschreibung

Verfahren und Vorrichtung zur mehrstufigen Datenverarbeitung, insbesondere zur Diagnose, in einer technischen Anlage.

Die Erfindung betrifft ein Verfahren gemäß dem Oberbegriff des Anspruchs 1 sowie eine Vorrichtung gemäß dem Oberbegriff des Anspruchs 13 zur mehrstufigen Datenverarbeitung in einer technischen Anlage, wobei in mehreren verarbeitungsschritten eine komplexe Datenanalyse vorgenommen wird.

Um den Zustand einer technischen Anlage während ihres Betriebs überwachen und eine Diagnose bezüglich des Verhaltens von Kraftwerkskomponenten erstellen zu können, werden in der Regel eine Vielzahl an technischen Größen (beispielsweise Druck, Temperatur und Durchfluss) mittels Sensoren erfasst und die dabei gewonnenen Messwerte ausgewertet.

Die alleinige Kenntnis dieser Messwerte reicht jedoch für die Beurteilung des Zustands einer technischen Anlage meist nicht aus, so dass die erfassten Daten einer weiteren Verarbeitung zugeführt werden müssen. Dabei werden beispielsweise charakteristische Kenngrößen ermittelt, die gegenüber den bloßen Messwerten eine deutlich höhere und meist unzweideutige Aussagekraft besitzen, so dass dadurch eine gezielte Überwachung und Diagnose der technischen Anlage überhaupt erst ermöglicht wird.

Zur weitergehenden Datenanalyse der erfassten Daten ist es bekannt, eine Steuereinrichtung einzusetzen, welche die gesamte Datenverarbeitung steuert. Jedoch muss diese Steuereinrichtung die Ausführung der mehrstufigen Datenverarbeitung komplett überwachen. In den einzelnen Stufen der Datenverarbeitung werden die erfassten Daten in einer festgelegten Reihenfolge einer jeweils spezifischen Analyse unterzogen und beispielsweise pro Stufe jeweils eine Kenngröße ermittelt.

Wenn bei dieser Datenverarbeitung in einer der Stufen oder bei der Steuereinrichtung selbst ein Fehler auftritt - sei es weil die Datenanalyse fehlerhaft konzipiert wurde oder weil sich die technische Anlage oder deren Messwerterfassung in einem Zustand befindet, für den die Datenanalyse bisher nicht ausgelegt war - so bricht die Steuereinrichtung die Datenverarbeitung in der Regel ab.

Es ist dann in der Regel nur sehr schwer feststellbar, an welcher Stelle der Datenverarbeitung der Fehler zu suchen ist, so dass während der Fehlersuche oftmals das System zur Überwachung und Diagnosestellung oder sogar die technische Anlage abgeschaltet werden müssen. Wenn während der Fehlersuche das Überwachungssystem abgeschaltet wird, so stehen während dieser Zeit anfallende Daten beispielsweise für eine Langzeitbetrachtung des Verhaltens der technischen Anlage später nicht zur Verfügung, was die Genauigkeit der Überwachung und Diagnose vermindert.

Aus US-A-5 884 206 ist ein dezentralisiertes Steuersystem für Großmaschinen bekannt, bei dem unter anderem ein Zeitzähler (timer) verwendet wird, um eine Weitergabe einzelner Datenpakete zu kontrollieren. Der Zeitzähler wird zurückgesetzt, wenn erkannt wurde, dass die Weitergabe ordnungsgemäß verlaufen ist.

Der Erfindung liegt die Aufgabe zugrunde, ein Verfahren sowie eine Vorrichtung der eingangs genannten Art anzugeben, bei denen die Genauigkeit der Überwachung und Diagnose auf kostengünstige Weise erhöht sind.

Bezüglich des Verfahrens wird die Aufgabe erfindungsgemäß gelöst durch ein Verfahren zur mehrstufigen Datenverarbeitung, insbesondere zur Diagnose, in einer technischen Anlage gemäß Anspruch 1. Dabei umfasst das Verfahren folgende Schritte:
1. Zumindest ein Teil der in der technischen Anlage anfallenden Daten wird während des Betriebs der technischen Anlage erfasst.
2. Den erfassten Daten wird mindestens ein Informationselement zugeordnet, mittels welchem der Verarbeitungsstatus der Daten identifizierbar ist.
3. Die erfassten Daten werden sequentiell mittels mindestens zweier Datenverarbeitungsmodulen verarbeitet, wobei die Datenverarbeitungsmodule den Status des Informationselements verändern.

Dabei ist erfindungsgemäß aus dem Status des Informationselements ersichtlich, ob und ggf. welche Stufe der Datenverarbeitung bereits stattgefunden hat oder ggf. fehlerhaft war.

Eine ggf. notwendige Fehlersuche wird dann durch Auswertung des Status des Informationselements erheblich vereinfacht. Die Datenanalysemodule sind dabei jeweils eigenständig und können dazu ertüchtigt sein, aus den erfassten Daten jene herauszugreifen, bei welchen der Status des jeweiligen Informationselements anzeigt, dass die betreffenden Daten für die Bearbeitung durch das aktuelle Datenverarbeitungsmodul vorbereitet sind.

Das betreffende Datenverarbeitungsmodul nimmt dann die Bearbeitung der erfassten Daten oder eines Teils davon auf. Dabei kann es erfindungsgemäß weiterhin den Status des Informationselements derart verändern, dass daraus ersichtlich ist, dass sich die betreffenden Daten gerade in Verarbeitung beim aktuellen Datenverarbeitungsmodul befinden. Die Ergebnisse der Datenverarbeitung können vom Datenverarbeitungsmodul den erfassten Daten beigegeben und ggf. abgespeichert werden.

Nach einer Verarbeitung der Daten durch das aktuelle Datenverarbeitungsmodul verändert das aktuelle Datenverarbeitungsmodul den Status des Informationselements bevorzugt derart, dass daraus erkennbar wird, ob die Daten erfolgreich oder nicht erfolgreich bearbeitet wurden. Es ist also aus dem Status des Informationselements ersichtlich, ob das betreffende Datenverarbeitungsmodul in der Lage war, sinnvolle Verarbeitungsergebnisse, beispielsweise Kenngrößen, zu erzeugen.

Aufgrund des veränderlichen Status des Informationselements können die erfassten Daten abhängig vom aktuellen Status des Informationselements gezielt von anderen Datenverarbeitungsmodulen identifiziert und einer weiteren Verarbeitung zugeführt werden, da der aktuelle Status des Informationselements die Eignung der aktuell vorliegenden Daten für eine weitergehende Analyse in einer nächsten Stufe anzeigt.

Des Weiteren ist aufgrund des Status des Informationselements feststellbar, welche Verarbeitungsstufen die Daten bereits durchlaufen haben.

Eine Steuerung zur Überwachung und Koordinierung der mehrstufigen Datenverarbeitung ist daher überflüssig.

Es ist lediglich sicherzustellen, dass die Bearbeitungszyklen der Datenverarbeitungsmodule hinreichend oft gestartet werden, damit die Daten alle gewünschten Datenverarbeitungsmodule innerhalb einer gewünschten Bearbeitungszeit durchlaufen können.

Ein wichtiger Vorteil des erfindungsgemäßen Verfahrens ist darin zu sehen, dass jede Stufe der Datenverarbeitung mittels eines separaten der jeweiligen Stufe zugeordneten Datenverarbeitungsmoduls stattfindet und daher der Ausfall einer oder mehrerer der Datenverarbeitungsmodule die Funktionsfähigkeit der jeweils anderen Datenverarbeitungsmodule und damit die Ermittlung von entsprechenden Teil-Verarbeitungsergebnissen nicht beeinträchtigt. Es liegen folglich mindestens so viele verwertbare Teilergebnisse vor, wie funktionstüchtige Analysemodule vorhanden sind bzw. wie viele der Analysemodule entsprechend ihres jeweiligen Analysealgorithmus geeignet sind, die Daten zu bearbeiten.

Des Weiteren können fehlerhafte Analysemodule aufgrund des aktuellen Status des Informationselements schnell identifiziert und gegen entsprechende Ersatzmodule ausgetauscht werden. Diese Ersatzmodule können dann die fehlgeschlagene Verarbeitung nachholen.

Das Informationselement repräsentiert die Historie der Daten bezüglich deren bereits durchlaufener Stufen der Datenverarbeitung.

Ferner ist es möglich, die Analysemodule innerhalb von Computernetzwerken zu realisieren, beispielsweise innerhalb des Internets, da eine zentrale Koordination der einzelnen Analysemodule nicht erforderlich ist.

Vorteilhaft ist die Reihenfolge der Datenverarbeitung mittels der mindestens zwei Datenverarbeitungsmodule beliebig.

Da bei einem erfindungsgemäßen Verfahren mehrere Stufen der Datenverarbeitung mittels jeweils mindestens eines Datenverarbeitungsmoduls realisiert sind, kann zumindest einen Teil dieser Datenverarbeitungsmodule jeweils die Aufgabe einer eigenständig durchführbaren Datenverarbeitung übertragen werden, welche keine Verarbeitungsergebnisse anderer Datenverarbeitungsstufen benötigen. Deshalb spielt es bei dieser Ausführungsform der Erfindung keine Rolle, in welcher Reihenfolge die Daten von den Datenverarbeitungsmodulen verarbeitet werden. Dadurch kann bei der Verwendung von Rechnern die verfügbare Bearbeitungszeit optimiert werden, indem beispielsweise die Daten bevorzugt in einem nächsten Schritt von demjenigen Analysemodul bearbeitet werden, welches augenblicklich verfügbar ist und genügend freie Rechenzeit zur Verfügung stellt.

In einer bevorzugten Ausführungsform der Erfindung wird die Erfassung der Daten taktgesteuert.

Um ein kontinuierliches Bild des Verhaltens der technischen Anlage zu erhalten, ist eine Erfassung der anfallenden Daten in festen Zeitabständen besonders vorteilhaft. Dies kann beispielsweise dadurch bewerkstelligt werden, dass eine Einrichtung zur Messwerterfassung mittels eines Taktgebers getriggert wird und daraufhin gewünschte Messwerte einliest. Da der zeitliche Abstand zwischen zwei Takten gewöhnlich konstant oder zumindest bekannt ist, kann dabei auch auf einfache Weise ein Gradient, also ein Trend der betrachteten Messwerte ermittelt werden.

In einer besonders bevorzugten Ausführungsform werden die erfassten Daten in eine Anzahl an Datenpakete aufgeteilt.

Diese Aufteilung in Datenpakete kann ebenfalls von einem Taktgeber gesteuert werden. Dabei können beispielsweise die Daten jeweils eines oder mehrerer vom Taktgeber vorgegebener Intervalle ein Datenpaket bilden. Dabei ist es nicht notwendig, dass die Zeitintervalle gleich groß sind oder dass immer die gleiche Anzahl an Zeitintervallen ein Datenpaket bildet.

Ein besonderer Vorteil der Datenpaketbildung ist darin zu sehen, dass in einem Datenpaket solche Teile der erfassen Daten zusammengefasst werden können, welche in einem bestimmten Zusammenhang zueinander stehen und/oder welche von besonderem Interesse sind und/oder welche zusammen verarbeitet werden sollen. Durch die Datenpaketbildung können die erfassten Daten einer ersten Sortierung unterzogen werden.

Die Bildung von Datenpaketen kann ferner dazu dienen, die zeitliche Veränderung einer festen, in einem Datenpaket zusammengefassten, Messwertzusammenstellung mittels der Datenverarbeitungsmodule zu analysieren. Dazu werden beispielsweise in bestimmten Zeitabständen die jeweils aktuellen Messwerte bestimmter Prozessgrößen der technischen Anlage erfasst und in jeweils einem Datenpaket zusammengefasst. Ein Vergleich entsprechender Datenpakete aus unterschiedlichen Takten gestattet dann auf einfache Weise die Ermittlung eines Trends der im Datenpaket enthaltenen Daten.

Weiterhin ist es vorteilhaft, wenn jedem Datenpaket jeweils mindestens ein Informationselement zugeordnet wird.

Bei dieser Ausführungsform ist auch für Teile der erfassten Daten, welche in einem Datenpaket zusammengefasst sind, eine Aussage über den Verarbeitungsstatus des jeweiligen Datenpakets möglich. Dadurch ist zum einen das Aufspüren eines möglicherweise fehlerhaften Datenverarbeitungsmoduls weiter erleichtert. Außerdem ist in demjenigen Fall, in welchem ein Datenverarbeitungsmodul aufgrund seines Verarbeitungsalgorithmus nicht geeignet ist, bestimmte Daten zu bearbeiten, nicht eine große oder die gesamte Menge an erfassten Daten von der Insuffizienz des jeweiligen Datenverarbeitungsmoduls betroffen; lediglich diejenigen Datenpakete, welche derartige nicht verarbeitbare Daten enthalten, bleiben unbearbeitet.

In einer weiteren bevorzugten Ausgestaltung der Erfindung werden die erfassten Daten in einem Speicher, insbesondere in einer Datenbank, abgelegt.

Auf diese Weise können nicht nur aktuell anfallende Daten, sondern auch historische Daten der technischen Anlage mittels der Verarbeitungsmodule einer Analyse unterzogen werden. Ferner können die gespeicherten Daten zum Testen und Optimieren der Datenverarbeitungsmodule verwendet werden.

Bevorzugt repräsentiert der Status des Informationselements einen Verarbeitungsstatus der erfassten Daten.
Der Verarbeitungsstatus der erfassten Daten kann dabei beispielsweise Auskunft darüber geben, welche der Datenverarbeitungsmodule von den erfassten Daten bereits durchlaufen worden sind und/oder ob die dabei erfolgte Verarbeitung, insbesondere die Ermittlung von Verarbeitungsergebnissen, erfolgreich war.

In einer weiteren vorteilhaften Ausgestaltung der Erfindung wird die Datenverarbeitung mittels der Datenverarbeitungsmodule durch eine Steuereinrichtung gesteuert.

Die Steuereinrichtung kann dabei beispielsweise dafür sorgen, dass ein jeweiliger Bearbeitungszyklus der Datenverarbeitungsmodule hinreichend oft gestartet wird, damit die Datenpakete alle gewünschten Datenverarbeitungsmodule und damit alle gewünschten Verarbeitungsstufen innerhalb einer gewünschten Bearbeitungszeit durchlaufen können. Ferner kann die Steuereinrichtung auch die Verteilung einer zur Verfügung stehenden Rechenkapazität steuern.

Die Steuereinrichtung kann als eine einzige, zentrale Steuereinrichtung für alle Datenverarbeitungsstufen oder alternativ als mehrere Steuereinrichtungen ausgebildet sein, wobei zumindest einem Teil der Datenverarbeitungsmodule jeweils eine eigene Steuereinrichtung zugeordnet ist.

Vorteilhaft werden die Datenverarbeitungsmodule taktgesteuert. Mittels einer Taktsteuerung der Datenverarbeitungsmodule kann beispielsweise deren Bearbeitungszyklus in gewünschten Zeitabständen gestartet werden. Die Taktlänge kann dabei an die jeweils erforderliche Rechenzeit der Datenverarbeitungsstufen angepasst werden. Dadurch ist die benötigte Bearbeitungszeit der Daten in den Datenverarbeitungsmodulen optimiert.

Die Erfindung führt weiterhin zu einer Vorrichtung zur mehrstufigen Datenverarbeitung, insbesondere zur Diagnose, in einer technischen Anlage, mit folgenden Komponenten:
- mindestens eine Einrichtung zur Messwerterfassung, mittels welcher zumindest ein Teil der in der technischen Anlage anfallenden Daten während des Betriebs der technischen Anlage erfassbar ist,
- mindestens ein den erfassten Daten zugeordnetes Informationselement, mittels welchem der Verarbeitungsstatus der Daten identifizierbar ist, und
- mindestens zwei Datenverarbeitungsmodule zur sequentiellen Verarbeitung der erfassten Daten, wobei mittels der Datenverarbeitungsmodule der Status des Informationselements veränderbar ist.

Weitere vorteilhafte Ausgestaltungen der erfindungsgemäßen Vorrichtung sind in den abhängigen Patentansprüchen niedergelegt.

Im Folgenden wird ein Ausführungsbeispiel der Erfindung näher dargestellt. Es zeigt:
- FIG: eine erfindungsgemäße Vorrichtung zur mehrstufigen Datenverarbeitung umfassend eine Anzahl an Datenverarbeitungsmodulen.

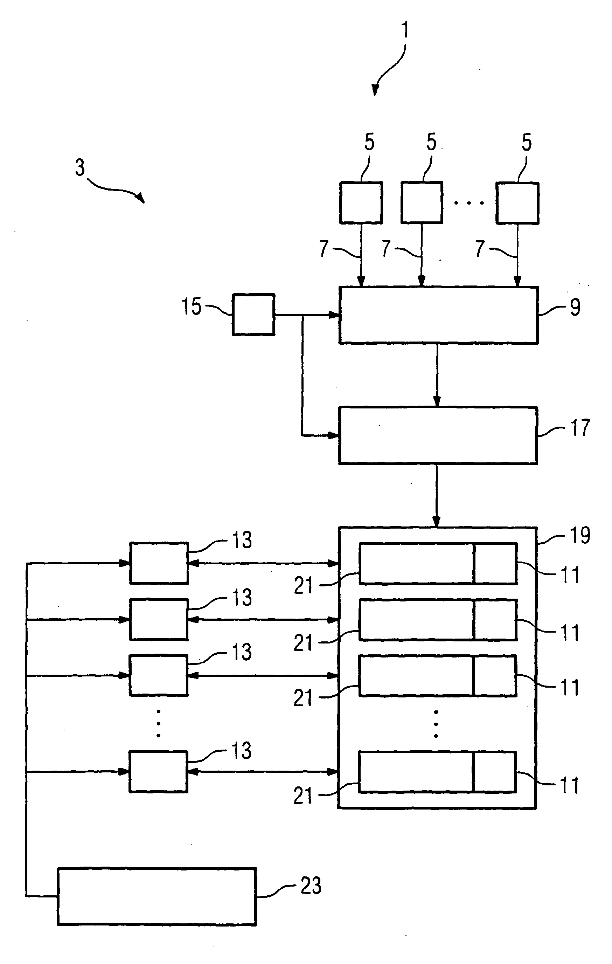

Die Figur zeigt schematisch eine erfindungsgemäße Vorrichtung 1.

In einer technischen Anlage 3 läuft eine Anzahl an Prozessen 5 ab, welche Daten 7, beispielsweise mittels Sensoren erfasste Messwerte, erzeugen. Diese Daten 7 werden von einer Einrichtung 9 zur Messwerterfassung eingelesen. Das Einlesen der Daten wird mittels eines Taktgebers 15 gesteuert sein.

In einer Verarbeitungseinheit 10 werden die erfassten Daten 7 in Datenpakete 21 aufgeteilt. Diese Aufteilung kann beispielsweise eine Gruppierung und damit Aufteilung der während eines Takts erfassten Daten oder eine Zusammenstellung von Datenpaketen 21 mit jeweils gleichartigen Daten aus unterschiedlichen Takten umfassen.

Die Datenpakete 21 werden mit jeweils einem Informationselement 11 versehen, welches den Bearbeitungsstatus des jeweiligen Datenpakets repräsentiert.

Die Datenpakete 21 werden vorteilhaft in einem Speicher 19 abgelegt. Die Datenverarbeitung der Datenpakete 21 wird von einer Anzahl an Datenverarbeitungsmodulen 13 übernommen, welche jeweils eine Datenverarbeitungsstufe realisieren.

Die Datenverarbeitungsmodule 13 sind dabei getrennt voneinander realisiert, so dass der Ausfall eines oder mehrerer der Datenverarbeitungsmodule 13 die Funktion der jeweils anderen Datenverarbeitungsmodule nicht beeinträchtigt.

Aufgrund des aktuellen Status des Informationselements 11 werden von einem oder mehreren Datenverarbeitungsmodulen 13 diejenigen Datenpakete 21 herausgefiltert und verarbeitet, welche zur Verarbeitung oder Weiterverarbeitung durch dieses Datenverarbeitungsmodul 13 geeignet oder vorbereitet sind. Die von den Datenverarbeitungsmodulen ermittelten Verarbeitungsergebnisse, beispielsweise Kenngrößen, können von den Datenverarbeitungsmodulen 13 den jeweils bearbeiteten Datenpaketen 21 beigegeben werden.

Ferner verändern die Datenverarbeitungsmodule 13 den Status des Informationselements 11, indem dieses beispielsweise bei Aufnahme der Bearbeitung durch ein bestimmtes Datenverarbeitungsmodul 13 seinen Wert ändert und dieser Wert nach Vorliegen des entsprechenden Verarbeitungsergebnisses wiederum verändert wird.

So kann aufgrund des aktuellen Status des Informationselements 11 durch die Datenverarbeitungsmodule 13 leicht festgestellt werden, welche Datenverarbeitungsstufen ein bestimmtes Datenpaket 21 bereits durchlaufen hat. Falls die Ermittlung eines Verarbeitungsergebnisses durch eines der Datenverarbeitungsmodule 13 nicht möglich ist, so kann der Wert des Informationselements 11 ebenfalls verändert werden, so dass ein Scheitern der Datenverarbeitung eines Datenpakets durch ein bestimmtes Datenverarbeitungsmodul 13 ebenfalls leicht identifizierbar ist.

Die Koordinierung der Datenverarbeitungsmodule 13 kann wie im vorliegenden Ausführungsbeispiel durch eine für die Datenverarbeitungsmodule 13 zentrale Steuereinheit 23 realisiert sein. Es ist aber auch möglich, dass jedem Datenverarbeitungsmodul 13 eine jeweils eigene Steuereinheit zugeordnet ist.

## Patentansprüche

1. Verfahren zur mehrstufigen Datenverarbeitung, insbesondere zur Diagnose, in einer technischen Anlage (3),
mit dem Schritt:
a) zumindest ein Teil der in der technischen Anlage (3) anfallenden Daten (7) wird während des Betriebs der technischen Anlage (3) erfasst,
**gekennzeichnet durch** folgende Schritte:
b) den erfassten Daten (7) wird mindestens ein Informationselement (11) zugeordnet, mittels welchem der Verarbeitungsstatus der Daten (7) derart identifizierbar ist, dass aus dem Status des Informationselements (11) ersichtlich ist, ob eine und gegebenenfalls welche Stufe der Datenverarbeitung bereits stattgefunden hat oder gegebenenfalls fehlerhaft war, und
c) die erfassten Daten (7) werden sequentiell mittels mindestens zweier Datenverarbeitungsmodule (13) verarbeitet, wobei die Datenverarbeitungsmodule (13) den Status des Informationselements (11) derart verändern, dass daraus ersichtlich ist, dass sich die betreffenden Daten gerade in Verarbeitung beim aktuellen Datenverarbeitungsmodul (13) befinden.

2. Verfahren nach Anspruch 1,
**dadurch gekennzeichnet, dass**
die Reihenfolge der Datenverarbeitung mittels der mindestens zwei Datenverarbeitungsmodule (13) beliebig ist.

3. Verfahren nach einem der Ansprüche 1 oder 2,
**dadurch gekennzeichnet, dass**
die Erfassung der Daten (7) taktgesteuert wird.

4. Verfahren nach einem der Ansprüche 1 bis 3,
**dadurch gekennzeichnet, dass**
die erfassten Daten (7) in eine Anzahl an Datenpakete (21) aufgeteilt werden.

5. Verfahren nach Anspruch 4,
**dadurch gekennzeichnet, dass**
jedem Datenpaket (21) jeweils mindestens ein Informationselement (11) zugeordnet wird.

6. Verfahren nach einem der Ansprüche 1 bis 5,
**dadurch gekennzeichnet, dass** die erfassten Daten (7) in einem Speicher (19), insbesondere in einer Datenbank, abgelegt werden.

7. Verfahren nach einem der Ansprüche 1 bis 6, **dadurch gekennzeichnet, dass** der Status des Informationselements (11) einen Verarbeitungsstatus der erfassten Daten (7) repräsentiert.

8. Verfahren nach Anspruch 7,
**dadurch gekennzeichnet, dass**
der Verarbeitungsstatus Informationen darüber umfasst, ob die erfassten Daten (7) von einem bestimmten Datenverarbeitungsmodul (13) bereits verarbeitet worden sind und/oder ob diese Verarbeitung erfolgreich gewesen ist.

9. Verfahren nach einem der Ansprüche 1 bis 8,
**dadurch gekennzeichnet, dass**
die Datenverarbeitung mittels der Datenverarbeitungsmodule (13) durch eine Steuereinrichtung (23) gesteuert wird.

10. Verfahren nach Anspruch 9,
**dadurch gekennzeichnet, dass**
die Datenverarbeitung mittels der Datenverarbeitungsmodule (13) durch eine einzige Steuereinrichtung (23) gesteuert wird.

11. Verfahren nach Anspruch 9,
**dadurch gekennzeichnet, dass** zumindest einem Teil der Datenverarbeitungsmodule (13) jeweils eine eigene Steuereinrichtung (23) zugeordnet ist.

12. Verfahren nach einem der Ansprüche 1 bis 11,
**dadurch gekennzeichnet, dass**
die Datenverarbeitungsmodule (13) taktgesteuert werden.

13. Vorrichtung (1) zur mehrstufigen Datenverarbeitung, inbesondere zur Diagnose, in einer technischen Anlage (3), mit
• mindestens einer Einrichtung (9) zur Messwerterfassung, mittels welcher zumindest ein Teil der in der technischen Anlage anfallenden Daten (7) während des Betriebs der technischen Anlage (3) erfassbar ist, **gekennzeichnet durch**
• mindestens ein den erfassten Daten (3) zugeordnetes Informationselement (11), mittels welchem der Verarbeitungsstatus der Daten (7) derart identifizierbar ist, dass aus dem Status des Informationselements (11) ersichtlich ist, ob eine und gegebenenfalls welche Stufe der Datenverarbeitung bereits stattgefunden hat oder gegebenenfalls fehlerhaft war, und
• mindestens zwei Datenverarbeitungsmodule (13) zur sequentiellen Verarbeitung der erfassten Daten (7), wobei mittels der Datenverarbeitungsmodule (13) der Status des Informationselements (11) derart veränderbar ist, dass daraus ersichtlich ist, dass sich die betreffenden Daten gerade in Verarbeitung beim aktuellen Datenverarbeitungsmodul (13) befinden.

14. Vorrichtung (1) nach Anspruch 13,
**gekennzeichnet durch**
einen Taktgeber (15) zur taktgesteuerten Erfassung der Daten (7).

15. Vorrichtung (1) nach Anspruch 13 oder 14,
**gekennzeichnet durch**
eine Verarbeitungseinheit (17), mittels welcher die erfassten Daten (7) in eine Anzahl an Datenpaketen (21) aufteilbar ist.

16. Vorrichtung (1) nach Anspruch 15,
**dadurch gekennzeichnet, dass**
jedem Datenpaket (21) jeweils mindestens ein Informationselement (11) zugeordnet ist.

17. Vorrichtung (1) nach einem der Ansprüche 13 bis 16,
**gekennzeichnet durch**
einen Speicher (19), in welchen die erfassten Daten (7) ablegbar sind.

18. Vorrichtung (1) nach einem der Ansprüche 13 bis 17,
**gekennzeichnet durch**
eine Steuereinheit (23), mittels welcher die Datenverarbeitung mittels der Datenverarbeitungsmodule (13) steuerbar ist.

## Claims

1. Method for multistage data processing, in particular for diagnostics, in a technical system (3),
with the following step:
a) at least part of the data (7) acquired in the technical system (3) is captured while the technical system (3) is in operation,
**characterised by** the following steps:
b) the captured data (7) is assigned at least one information element (11) by means of which the processing status of the data (7) can be identified such that it is evident whether and if necessary which stage of the data processing has already taken place or may have contained errors, and
c) the captured data (7) is processed sequentially by means of at least two data processing modules (13), whereby the data processing modules (13) change the status of the information element (11) such that it is evident from said status that the data involved is currently being processed by the current data processing module (13).

2. Method according to claim 1,
**characterised in that**
the sequence of the data processing by means of the at least two data processing modules (13) is random.

3. Method according to one of claims 1 or 2,
**characterised in that**
the acquisition of the data (7) is clock-controlled.

4. Method according to one of claims 1 to 3,
**characterized in that**
the captured data (7) is subdivided into a number of data packets (21).

5. Method according to claim 4,
**characterised in that**
each data packet (21) is assigned at least one information element (11).

6. Method according to one of the claims 1 to 5,
**characterised in that**
the captured data (7) is stored in a memory (19), in particular in a database.

7. Method according to one of the claims 1 to 6,
**characterised in that**
the status of the information element (11) represents a processing status of the captured data (7).

8. Method according to claim 7,
**characterised in that**
the processing status comprises information regarding whether the captured data (7) has already been processed by a specific data processing module (13) and/or whether this processing was successful.

9. Method according to one of claims 1 to 8,
**characterised in that**
the data processing performed by the data processing modules (13) is controlled by a control device (23).

10. Method according to claim 9,
**characterised in that**
the data processing performed by the data processing modules (13) is controlled by a single control device (23).

11. Method according to claim 9,
**characterised in that**
at least some of the data processing modules (13) are each assigned their own control device (23).

12. Method according to one of the claims 1 to 11,
**characterised in that**
the data processing modules (13) are clock-controlled.

13. Device (1) for multistage data processing, in particular for diagnostics, in a technical system (3),
with
• at least one device (9) for measured value acquisition by means of which at least part of the data (7) acquired in the technical system can be captured while the technical system (3) is in operation,
**characterised by**
• at least one information element assigned to the captured data (3), by means of which element the processing status of the data (7) can be identified such that it is evident whether and if necessary which stage of the data processing has already taken place or may have contained errors, and
• at least two data processing modules (13) for sequential processing of the captured data (7), the status of the information element (11) being modifiable by means of the data processing modules (13) such that it is evident from said status that the data involved is currently being processed by the current data processing module (13).

14. Device (1) according to claim 13,
**characterised by**
a clock generator (15) for clock-controlled acquisition of the data (7).

15. Device (1) according to one of claims 13 or 14,
**characterised by**
a processing unit (17) by means of which the captured data (7) can be subdivided into a number of data packets (21).

16. Device (1) according to claim 15,
**characterised in that**
each data packet (21) is assigned at least one information element (11).

17. Device (1) according to one of claims 13 to 16,
**characterised by**
a memory (19) in which the captured data (7) can be stored.

18. Device (1) according to one of the claims 13 to 17,
**characterised by**
a control unit (23) by means of which the data processing performed by the data processing modules (13) can be controlled.

## Revendications

1. Procédé de traitement de données à plusieurs niveaux, notamment pour le diagnostic dans une installation ( 3 ) technique, comprenant le stade :
a) on relève, pendant le fonctionnement de l'installation ( 3 ) technique, au moins une partie des données ( 7 ) concernant l'installation ( 3 ) technique,
**caractérisé par** les stades suivants :
b) on associe aux données ( 7 ) relevées au moins un élément ( 11 ) d'information, au moyen duquel on peut identifier le statut de traitement des données ( 7 ), de manière à pouvoir voir à partir du statut de l'élément ( 11 ) d'information si un niveau et, le cas échéant, quel niveau du traitement de données, a déjà eu lieu ou était, le cas échéant, manquant, et
c) on traite les données ( 7 ) relevées séquentiellement au moyen d'au moins deux modules ( 13 ) de traitement de données, les modules ( 13 ) de traitement de données modifiant le statut de l'élément ( 1 ) d'information, de manière à pouvoir voir que les données concernées se trouvent précisément en traitement dans le module ( 13 ) de traitement de données présent.

2. Procédé suivant la revendication 1,
**caractérisé en ce que**
l'ordre du traitement de données au moyen des au moins deux modules ( 13 ) de traitement de données est quelconque.

3. Procédé suivant l'une des revendications 1 ou 2,
**caractérisé en ce que**
on commande en cadence le relevé des données ( 7 ).

4. Procédé suivant l'une des revendications 1 à 3,
**caractérisé en ce que**
on répartit les données ( 7 ) relevées en un certain nombre de paquets ( 21 ) de données.

5. Procédé suivant la revendication 4,
**caractérisé en ce que**
on affecte respectivement au moins un élément ( 11 ) d'information à chaque paquet ( 21 ) de données.

6. Procédé suivant l'une des revendications 1 à 5,
**caractérisé en ce que**
on mémorise les données ( 7 ) relevées dans une mémoire ( 19 ), notamment dans une base de données.

7. Procédé suivant l'une des revendications 1 à 6,
**caractérisé en ce que**
le statut de l'élément ( 11 ) d'information représente un statut de traitement des données ( 7 ) relevées.

8. Procédé suivant la revendication 7,
**caractérisé en ce que**
le statut de traitement comprend des informations sur le point de savoir si les données ( 7 ) relevées ont été déjà traitées par un module ( 13 ) de traitement de données déterminé et/ou si ce traitement a été couronné de succès.

9. Procédé suivant l'une des revendications 1 à 8,
**caractérisé en ce que**
on commande, par un dispositif ( 23 ) de commande, le traitement de données au moyen des modules ( 13 ) de traitement de données.

10. Procédé suivant la revendication 9,
**caractérisé en ce que**
on commande, par un dispositif ( 23 ) de commande unique, le traitement de données au moyen des modules ( 13 ) de traitement de données.

11. Procédé suivant la revendication 9,
**caractérisé en ce que**
on affecte respectivement un dispositif ( 23 ) de commande propre à au moins une partie des modules ( 13 ) de traitement de données.

12. Procédé suivant l'une des revendications 1 à 11,
**caractérisé en ce que**
on commande en cadence les modules ( 13 ) de traitement de données.

13. Dispositif ( 1 ) de traitement de données à plusieurs niveaux, notamment pour le diagnostic dans une installation ( 3 ) technique, comprenant
• au moins un dispositif ( 9 ) de relevé de valeurs de mesure, au moyen duquel au moins une partie des données ( 7 ) concernant l'installation technique peut être relevée pendant le fonctionnement de l'installation ( 3 ) technique, **caractérisé par**
• au moins un élément ( 11 ) d'information, qui est affecté aux données ( 7 ) relevées et au moyen duquel le statut de traitement des données ( 7 ) peut être identifié, de manière à pouvoir voir à partir du statut de l'élément ( 11 ) d'information, si un niveau et, le cas échéant, quel niveau du traitement a déjà eu lieu ou, le cas échéant, était manquant, et
• au moins deux modules ( 13 ) de traitement de données pour le traitement séquentiel des données relevées, le statut de l'élément ( 11 ) d'information pouvant être modifié au moyen des modules ( 13 ) de traitement de données, de manière à pouvoir voir que les données concernées se trouvent précisément en traitement dans le module ( 13 ) de traitement de données présent.

14. Dispositif ( 1 ) suivant la revendication 13,
**caractérisé par**
une horloge ( 15 ) pour le relevé en cadence des données ( 7 ).

15. Dispositif ( 1 ) suivant la revendication 13 ou 14,
**caractérisé par**
une unité ( 17 ) de traitement, au moyen de laquelle des données ( 7 ) relevées peuvent être réparties en un certain nombre de paquets ( 21 ) de données.

16. Dispositif ( 1 ) suivant la revendication 15,
**caractérisé en ce que**
respectivement au moins un élément ( 11 ) d'information est affecté à chaque paquet ( 11 ) de données.

17. Dispositif ( 1 ) suivant l'une des revendications 13 à 16,
**caractérisé par**
une mémoire ( 19 ), dans laquelle sont mémorisées les données ( 7 ) détectées.

18. Dispositif ( 1 ) suivant l'une des revendications 13 à 17,
**caractérisé par**
une unité ( 23 ) de commande, au moyen de laquelle le traitement de données au moyen des modules ( 13 ) de traitement de données peut être commandé.
